# EUROPÄISCHE PATENTANMELDUNG

(11) **EP 2 717 044 A1**
(43) Veröffentlichungstag der Anmeldung: **09.04.2014**
(21) Anmeldenummer: 12187111.5
(22) Anmeldetag: 03.10.2012
(51) Int. Cl.: G01N 30/74

(54) **Verfahren zur Detektion von Analyten**

(71) Anmelder: METROHM AG, 9100 Herisau (CH)
(72) Erfinder: Christensen, Björn, 9037 Speicherschwendi (CH); Hoffmann, Sven, 9103 Schwellbrunn (CH); Moritz, Thomas, 9100 Herisau (CH)
(74) Vertreter: Hepp Wenger Ryffel AG

(57) **Zusammenfassung**

Ein Verfahren zur Detektion von Analyten in der Durchflussanalyse und Chromatographie wird beschrieben, umfassend a) das Bereitstellen einer oder mehrere Lichtquellen, eines Lichtwellenleiters, eines Behältnisses enthaltend eine Probe mit einem oder mehreren Analyten und eines oder mehrerer Detektoren, b) das Aussetzen des Behältnisses enthaltend die Probe dem Licht einer oder unterschiedlicher, definierter Wellenlängen und/oder Wellenlängenbereiche und c) das Erfassen der resultierenden Lichtwellen mittels eines oder mehrerer Detektoren nach dem Aussetzen des Probenbehältnisses dem Licht einer oder unterschiedlicher, definierter Wellenlängen und/oder Wellenlängenbereiche , wobei das Bestrahlen der Probe erfolgt, indem die Lichtwellen vor Eintritt in das Probenbehältnis durch einen nicht flexiblen oder nicht flexibel angeordneten Lichtwellenleiter übertragen werden. Dieser nicht flexible oder nicht flexibel angeordnete Lichtwellenleiter ist nicht störungsanfällig und ermöglicht das selektive Bestrahlen mit einer oder mehreren Wellenlängen sequenziell oder gleichzeitig ohne hohen Zeitaufwand.

## Beschreibung

Die vorliegende Erfindung betrifft ein Verfahren zur Detektion von Analyten in der Chromatographie, insbesondere in der Ionen- und Flüssigchromatographie, wobei das Verfahren das Übertragen von Lichtwellen durch nicht flexible Lichtwellenleiter umfasst. Darüber hinaus betrifft die Erfindung die Verwendung von nicht flexiblen Lichtwellenleitern zur Übertragung von Lichtwellen bei der Detektion von Analyten in der Chromatographie, insbesondere in der Ionen- und Durchflusschromatographie, und in der Durchflussanalyse (CFA), insbesondere in der segmentierten Fliessanalyse (SFA), der Fliessinjektionsanalyse (FIA) und der sequenziellen Injektionsanalyse (SIA).

Die im Stand der Technik bekannten Verfahren zur Detektion von Analyten mit Hilfe von Lichtwellen bedienen sich unterschiedlicher Methoden zur Übertragung von Lichtwellen.
In herkömmlichen Verfahren werden Lichtquellen eingesetzt, die breite Bereiche des Spektrums abdecken. Um Proben selektiv mit einzelnen Wellenlängen oder Wellenlängenbereichen zu bestrahlen, werden Interferenzfilter verwendet. Ein Nachteil dieser Verfahren besteht darin, dass nicht mit mehreren definierten Wellenlängen oder engen Wellenlängenbereichen gleichzeitig bestrahlt werden kann. Zudem ist ein Filterwechsel für fliessende Proben zu zeitaufwendig.

US 2011/0188042 A1 beschreibt ein Verfahren zur spektroskopischen Analyse von Proben, insbesondere zur Absorptions- und Fluoreszenzspektroskopie. In diesem Verfahren werden Leuchtdioden einzelner Wellenlängen als Lichtquellen verwendet, deren emittierte Lichtwellen durch verschiedene einzelne Glasfaserkabel, die nur gebündelt werden, zu einer Probenzelle, die auch eine Durchflusszelle sein kann, geleitet werden. Das Durch- oder Fluoreszenzlicht wird anschliessend von einzelnen oder mehreren Photodioden erfasst.

Es hat sich gezeigt, dass ein derartiger Aufbau recht störungsempfindlich, insbesondere in Bezug auf mechanische Einflüsse, ist.

Betschon et al., Novel Optical Titration Sensor based on Integrated Planar Polymer Waveguides, SENSOR+TEST Conferences 2011, OPTO Proceedings, 4.2 beschreibt einen optischen Sensor, der in der Titration zum Einsatz kommt und einen in eine Platine integrierten, planaren Lichtwellenleiter enthält. Sowohl die Lichtquellen, als auch der Lichtwellenleiter und der Detektor befinden sich auf einer Platine, die in einen Glasstab integriert ist. Dieser wird während einer Titration in das Titrationsgefäss, in dem sich Analyten befinden, gehalten. Nicht gelöst wird durch diese Vorrichtung das Problem, Analyten in Lösungen zu messen, die sich im Fluss befinden, wie z.B. bei der Flüssigchromatographie oder der Durchflussanalyse (CFA).

Der vorliegenden Erfindung liegt daher die Aufgabe zugrunde, die Nachteile des Standes der Technik zu vermeiden, insbesondere ein Detektionsverfahren von Analyten in der Durchflussanalyse (CFA) und Chromatographie, insbesondere in der Flüssigchromatographie, zu entwickeln, welches ermöglicht, Proben mit Licht einer oder mehrer Wellenlängen gleichzeitig, selektiv und ohne hohen Zeitaufwand zu bestrahlen. Ferner sollte das Verfahren nicht störungsanfällig, z.B. durch mechanische Einflüsse, und empfindlich genug sein, um Analyten in geringen Mengen nachzuweisen.

Ein erster Aspekt der Erfindung betrifft ein Verfahren zur Detektion von Analyten in der Durchflussanalyse (CFA) und Chromatographie, umfassend
a) das Bereitstellen einer oder mehrere Lichtquellen, eines Lichtwellenleiters, eines Behältnisses enthaltend eine Probe mit einem oder mehreren Analyten und eines oder mehrerer Detektoren,
b) das Aussetzen des Behältnisses enthaltend die Probe dem Licht einer oder unterschiedlicher, definierter Wellenlängen und/oder Wellenlängenbereiche und
c) das Erfassen der resultierenden Lichtwellen mittels eines oder mehrerer Detektoren nach dem Aussetzen des Probenbehältnisses dem Licht einer oder unterschiedlicher, definierter Wellenlängen und/oder Wellenlängenbereiche, wobei das Bestrahlen der Probe erfolgt, indem die Lichtwellen vor Eintritt in das Probenbehältnis durch einen einzigen, gegebenenfalls verzweigten, nicht flexiblen Lichtwellenleiter übertragen werden.

Das genannte Verfahren kann insbesondere für die Durchflussanalyse (CFA) und Ionen- und Durchflusschromatographie angewandt werden. Die Analyten können Verbindungen enthaltend Chromophoren und/oder Ionen sein, welche Wellenlängen oder Wellenlängenbereiche aus wenigstens einem der Spektralbereiche des sichtbaren, UV-, IR- oder NIR-Lichts absorbieren, durch diese fluoreszieren oder diese reflektieren.

Die bereitgestellte Lichtquelle oder Lichtquellen können Wolframlampen, Laser und/oder Leuchtdioden sein. Besonders bevorzugt sind Laser und Leuchtdioden. Sie emittieren Licht definierter Wellenlängen oder eng definierter Wellenlängenbereiche aus dem sichtbaren, dem UV-, IR- und NIR-Bereich, das durch einen Lichtwellenleiter geführt wird. Anschliessend wird ein Probenbehältnis enthaltend eine flüssige Probe mit mindestens einem Analyten diesem Licht einer oder unterschiedlicher, definierter Wellenlängen und/oder Wellenlängenbereiche ausgesetzt. Die Probe kann selektiv mit Licht nur einer oder auch mehrerer Wellenlängen oder Wellenlängenbereichen gleichzeitig bestrahlt werden, da die Lichtquellen unabhängig voneinander an- und abgeschaltet werden können.

Besonders bevorzugt ist das Behältnis eine Durchflusszelle, die sowohl einen Einlass als auch einen Abfluss umfasst, durch welche eine flüssige Probe mit einer Geschwindigkeit von 10 µl/min bis 10 ml/min ein- bzw. wieder abfliesst. Das Behältnis umfasst ein Eintritts- bzw. Austrittsfenster für ein- und austretendes Licht, insbesondere bestehend aus Glas, Kunststoff oder Quarz, das so ausgestattet ist, dass es für definierte Wellenlängenbereiche durchlässig ist.

Das resultierende Licht, nachdem das Probenbehältnis enthaltend eine flüssige Probe mit mindestens einem Analyten mit dem Licht der Lichtquelle, welches über den Lichtwellenleiter übertragen wird, bestrahlt wurde, kann Durchlicht, reflektiertes Licht oder Fluoreszenzlicht sein. Das Licht wird nach Durchtritt, Reflektion oder nachdem es durch Fluoreszenz emittiert wurde von einem oder mehreren Detektoren erfasst.

Dabei erfolgt das Messintervall, in welchem der Detektor resultierende Lichtwellen erfasst, vorzugsweise während der Schaltzeit der Lichtquelle, setzt jedoch später ein als die Bestrahlung der Probe. In einer möglichen Ausführungsform wird mit der Messung erst begonnen, wenn die Hälfte der Zeit des Bestrahlungsintervalls vergangen ist. Mit dem Ende des Bestrahlungsintervalls endet auch das Messintervall.
In einem weiteren Verfahrensschritt wird eine weitere Messung der Signalstärke nach Ende des Bestrahlungsintervalls durchgeführt. Diese zweite Messung, die nicht während der Bestrahlung vorgenommen wird, dient dazu, dass die ermittelten, abgefallenen Signalintensitäten von den während der Bestrahlung gemessenen Intensitäten subtrahiert werden können, um dadurch die das Ergebnis verfälschenden Hintergrundsignale zu eliminieren.

Ein weiterer, sich an die Ermittlung der Lichtwellensignale anschliessender Verfahrensschritt umfasst ein mathematisches Auswertverfahren, mit welchem die erfassten Signale, die die Antwort auf mehrere sequenziell oder gleichzeitig emittierte Wellenlängen darstellen, ausgewertet werden.

Der oder die verwendeten Detektoren sind insbesondere Vakuum-Photozellen, Strahlungsthermoelemente, Photomultiplier und/oder Photodioden. Besonders bevorzugt werden Photodioden, insbesondere CCD- und CMOS-Sensoren, verwendet.

Der erfindungsgemässe Lichtwellenleiter kann insbesondere auf einer Platine angebracht bzw. darin integriert sein. Er zeichnet sich dadurch aus, dass er selbst, bzw. in einer Kombination aus einer Platine mit darauf angebrachtem oder darin integriertem Lichtwellenleiter nicht flexibel und vorzugsweise planar ist. Nicht flexibel bedeutet in diesem Zusammenhang, dass der Lichtwellenleiter bzw. der Lichtwellenleiter mit der Platine nicht so biegsam ist, dass ein Verbiegen, das zu Verlusten bei der Transmission von Licht oder zu irreversiblen Schäden führt, möglich ist. Diese Eigenschaft eliminiert die Störungsanfälligkeit in Bezug auf mechanische Einflüsse. So bewirkt ein Verbiegen einer Glasfaser in einem Radius von mehr als dem 200-fachen ihres Durchmessers, dass Transmissionsverluste auftreten. Es wurde im Rahmen der Erfindung gefunden, dass die starre Anordnung bzw. Fixierung des Lichtwellenleiters die Reproduzierbarkeit und die Sensitivität eines erfindungsgemässen Sensors verbessert. Ab einem Verbiegen im Radius von mehr als dem 600-fachen ihres Durchmessers treten bei Glasfasern irreversible Schäden auf. Platinen, auf denen ein Lichtwellenleiter angebracht bzw. darin integriert ist, können im Rahmen der Erfindung insbesondere aus einem Expoxidharz mit Glasfasergewebe (z.B. FR4) gefertigt werden und haben vorzugsweise eine Biegefestigkeit quer im Bereich von 600 N/mm bis 200 N/mm, vorzugsweise von 500 N/mm bis 300 N/mm, und längs eine Biegefestigkeit im Bereich von 600 N/mm bis 200 N/mm, vorzugsweise von 500 N/mm bis 300 N/mm.

Ein Lichtwellenleiter können auch in Polyimidplatinen integriert werden, welche auf Substrate laminiert werden, die die oben genannten Biegefestigkeiten aufweisen.

Es handelt sich bei dem Lichtwellenleiter um einen einzigen Leiter, durch den die Lichtwellen verschiedener Lichtquellen mit unterschiedlichen Wellenlängen geleitet werden. Gegebenenfalls kann der Lichtwellenleiter verzweigt sein, d.h. die Lichtwellen treten an unterschiedlichen Stellen entlang der Länge des Lichtwellenleiters in den Lichtwellenleiter ein.

Auf der Platine können zusätzlich eine oder mehrere Lichtquellen, insbesondere Leuchtdioden, angebracht, insbesondere integriert sein.

Die Platine mit integriertem Lichtwellenleiter kann dabei wie folgt aufgebaut sein: Die Platine mit den auf ihr montierten elektronischen Komponenten zur Auswertung eines optischen Signals stellt die unterste Schicht dar. Auf ihr angeordnet ist die so genannte optische Schicht, d.h. der Lichtwellenleiteraufbau. Der Lichtwellenleiter umfasst eine Unterlagenschicht, eine Kernschicht und eine Mantelschicht. Die Kernschicht umfasst die lichtleitenden Strukturen.

Alle drei Schichten können aus optisch transparenten, UVhärtenden Polymermaterialien gefertigt sein, wobei sich das Polymer der Kernschicht von denjenigen der Unterlagen- und Mantelschichten unterscheidet, die jeweils wiederum verschieden oder gleich sein können. Unter anderem können Polycarbonat und PMMA als Materialien der Polymerschichten verwendet werden.

Der Brechungsindex für sichtbares Licht der Kernschicht ist höher als die Brechungsindices der Unterlagen- und Mantelschichten und liegt vorzugsweise zwischen 1.50 und 1.60. Typische Brechungsindices für die Unterlagenschicht und Mantelschicht liegen zwischen 1.47 und 1.57.

Die Unterlagen- sowie die Mantelschicht weist typischerweise eine Schichtdicke von 10 µm bis 500 µm, vorzugsweise zwischen 50 und 200 µm, auf. Die Kernschicht kann eine Schichtdicke zwischen 1 µm und 500 µm besitzen.

Ein Verfahren zur Herstellung typischer Lichtwellenleiter ist beispielsweise in der Patentanmeldung EP 2 219 059 A2 beschrieben.

Eine oder mehrere LED Lichtquellen sind mit Hilfe eines auf den Brechungsindex der Kernschicht abgestimmten Klebstoffs auf der Oberseite der Platine angegossen und so zu der Kernschicht angeordnet, dass ihre emittierte Strahlung in den Lichtwellenleiter eingekoppelt werden kann. Das Einkoppeln kann dabei über ein Bauteil zur optischen Kopplung erfolgen, dessen Herstellung beispielsweise in EP 1 715 368 B1 beschrieben ist. Eine Platine umfasst besonders bevorzugt lediglich einen Lichtwellenleiter, in welchen das Licht mehrerer Lichtquellen eingekoppelt wird.
Eine Durchflusszelle ist im Winkel zwischen 70° bis 110°, bevorzugt im Winkel von 90°, zu der Austrittsfläche des Lichts des Lichtwellenleiters angeordnet. Eine Einkopplung des Lichts durch ein Kopplungselement ist hier nicht nötig. Stattdessen ist der Lichtwellenleiter passgenau an eine Wand der Durchflusszelle angepasst. Auch Verbindungsmaterialien wie Klebstoff sind zwischen Durchflusszelle und Lichtwellenleiter nicht nötig. Dieser Aufbau unterscheidet sich von herkömmlichen Photodioden Array Detektoren, welche aufwändige und teure Linsensysteme als Kopplungselemente umfassen.

Der Detektor, der die nach Bestrahlen der Probe resultierenden Lichtwellen erfasst, kann ebenfalls auf der Platine angeordnet sein.

Die Platine umfassend den Lichtwellenleiter oder den Lichtwellenleiter und die Lichtquelle oder Lichtquellen ist in einer besonders bevorzugten Ausführungsform von einer lichtdichten und/oder wärmeleitfähigen Abdeckung umgeben. Diese dient dem Schutz vor Temperaturschwankungen, insbesondere um die Leistung der Lichtquellen nicht zu beeinträchtigen, und der Abschirmung von Streulicht. Bevorzugt wird zur Abdeckung ein Metallgehäuse, insbesondere ein Aluminiumgehäuse verwendet. Das Gehäuse kann zusätzlich mit einer Kühlung, insbesondere einer Peltier-Kühlung, versehen sein.

Darüber hinaus umfasst die vorliegende Erfindung auch die Verwendung eines nicht flexiblen Lichtwellenleiters zur Übertragung von Lichtwellen bei der Detektion von Analyten in der Durchflussanalyse (CFA) und der Chromatographie, insbesondere in der Ionen- und/oder Flüssigchromatographie. Der Lichtwellenleiter, die Wellenlängen oder Wellenlängenbereiche der übertragenen Lichtwellen und die Analyten sind die oben beschriebenen. Die Sensitivität und Reproduzierbarkeit des erfindungsgemässen Aufbaus erlaubt überraschend den Einsatz nicht nur in einem stationären System wie einem Photometer, sondern auch in der Durchflusszelle.

Die Erfindung wird nachfolgend anhand von Ausführungsbeispielen und Figuren im Detail beschrieben, ohne dass der Gegenstand der Erfindung auf die bevorzugte Ausführungsform zu beschränken ist. Es zeigen:
- **Abb.1**: Schematische Darstellung des Aufbaus einer Platine mit daran angebrachtem oder darin integriertem Lichtwellenleiter, Lichtquelle und Durchflusszelle.
- **Abb.2a**: Schematische Darstellung eines unverzweigten Lichtwellenleiters.
- **Abb.2b**: Schematische Darstellung eines verzweigten Lichtwellenleiters
- **Abb.3**: Bestrahlungszyklus einer LED-Lichtquelle
- **Abb.4**: Messzyklus des Lichtdetektors
- **Abb.5**: Diagramm des Messzyklus beim Bestrahlen einer Probe in der Fliessinjektionsanalyse mit Hilfe mehrerer LED-Lichtquellen
- **Abb.6**: Chromatrogramm einer Chrom-Diphenylcarbazollösung

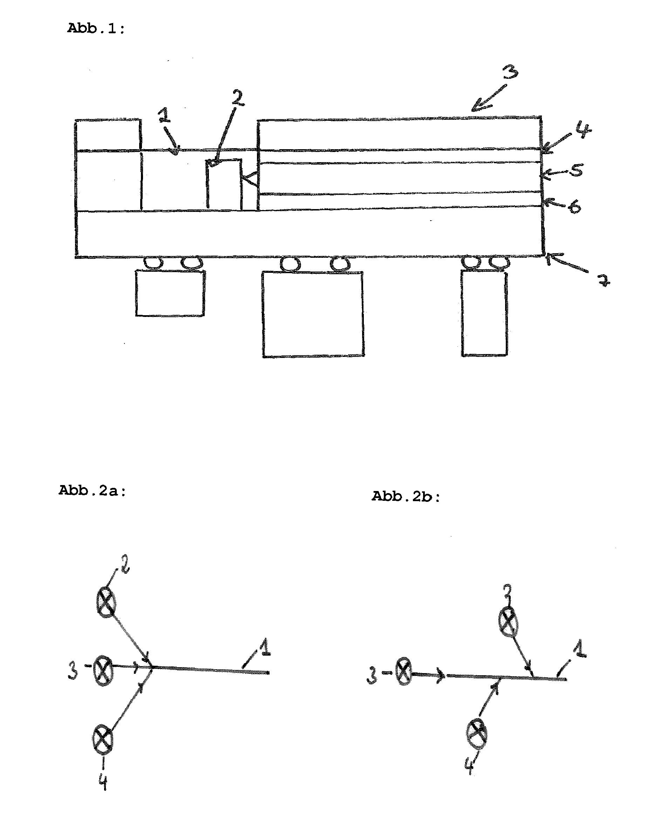

Abb.1 stellt den schematischen Aufbau einer Platine dar. Die Platine mit den auf ihr montierten elektronischen Komponenten zur Auswertung eines optischen Signals stellt die unterste Schicht (7) dar. Auf ihr angeordnet ist die so genannte optische Schicht, d.h. der Lichtwellenleiteraufbau. Der Lichtwellenleiter umfasst eine Unterlagenschicht (6), in der Mitte eine Kernschicht (5) und zuoberst eine Mantelschicht (4). Die Kernschicht (5) umfasst die lichtleitenden Strukturen. Eine oder mehrere LED Lichtquellen (2) sind mit Hilfe eines auf den Brechungsindex der Kernschicht abgestimmten Klebstoffs (1) auf der Oberseite der Platine angegossen und so zu der Kernschicht angeordnet, dass ihre emittierte Strahlung in den Lichtwellenleiter eingekoppelt werden kann. Das Einkoppeln erfolgt dabei über ein Bauteil zur optischen Kopplung, dessen Herstellung in EP 1 715 368 B1 beschreiben ist. Eine Platine umfasst lediglich einen Lichtwellenleiter, in welchen das Licht mehrerer Lichtquellen eingekoppelt wird. Die mit (3) bezeichnete Schicht stellt das Trägermaterial des Lichtwellenleiters dar. Nicht dargestellt in Abb.1 sind die Durchflusszelle enthaltend den oder die Analyten, welche mit dem Licht aus dem Lichtwellenleiter bestrahlt werden, sowie der oder die Detektoren.

**Abb.2** zeigt links eine schematische Darstellung **2a** eines unverzweigten Lichtwellenleiters 1, in welchen in Pfeilrichtung Lichtwellen der Lichtquellen 2, 3 und 4 an einer Stelle eintreten. Die schematische Darstellung **2b** zeigt einen verzweigten Aufbau des Lichtwellenleiters 1, in den Lichtwellen der Lichtquellen 2, 3 und 4 an verschiedenen Stellen entlang der Länge des Lichtwellenleiters 1 in Pfeilrichtung eintreten.

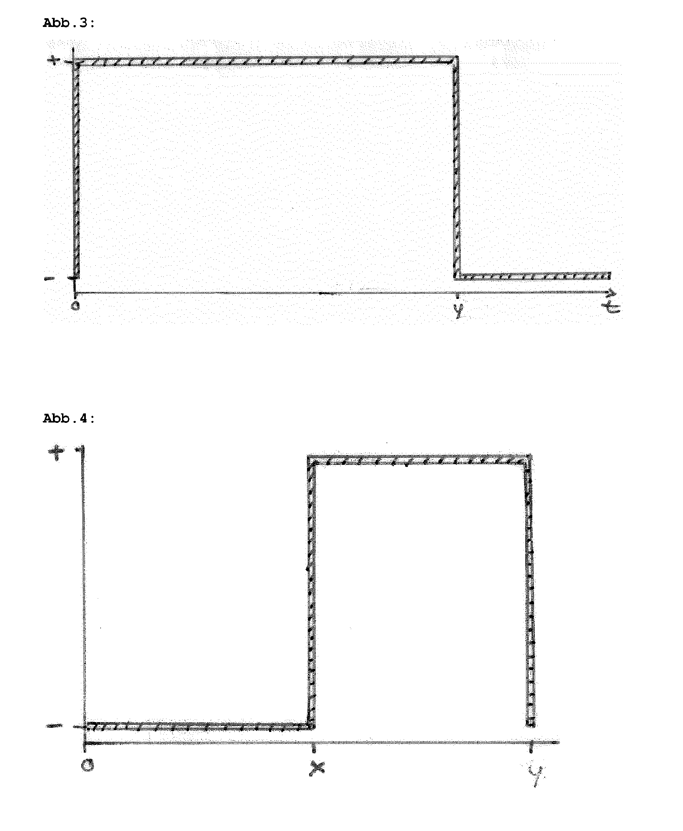

**Abb.3** zeigt den Bestrahlungszyklus einer LED-Lichtquelle. Auf der x-Achse ist die Zeit angegeben, auf der y-Achse ist durch die Symbole "+" und "-" angegeben, dass sich die Lichtquelle in der "+" Position im angeschalteten und in der "-" Position im ausgeschalteten Zustand befindet. Im Zeitintervall 0 bis y ist die LED-Lichtquelle angeschaltet.

**Abb.4** zeigt den Messzyklus des Lichtdetektors im Zeitraum des Bestrahlungszyklus der Lichtquelle. Auf der X-Achse ist die Zeit, auf der y-Achse die Angabe, ob sich die LED-Lichtquelle im angeschalteten ("+") oder im ausgeschalteten ("-") Zustand befindet, aufgetragen. Im Zeitintervall 0 bis y ist die LED-Lichtquelle angeschaltet. Das Zeitintervall x bis y ist der Zeitraum, in welchem der Lichtsensor angeschaltet ist. Im Intervall von 0 bis x, findet keine Detektion bzw. Messung der Lichtsignale statt.

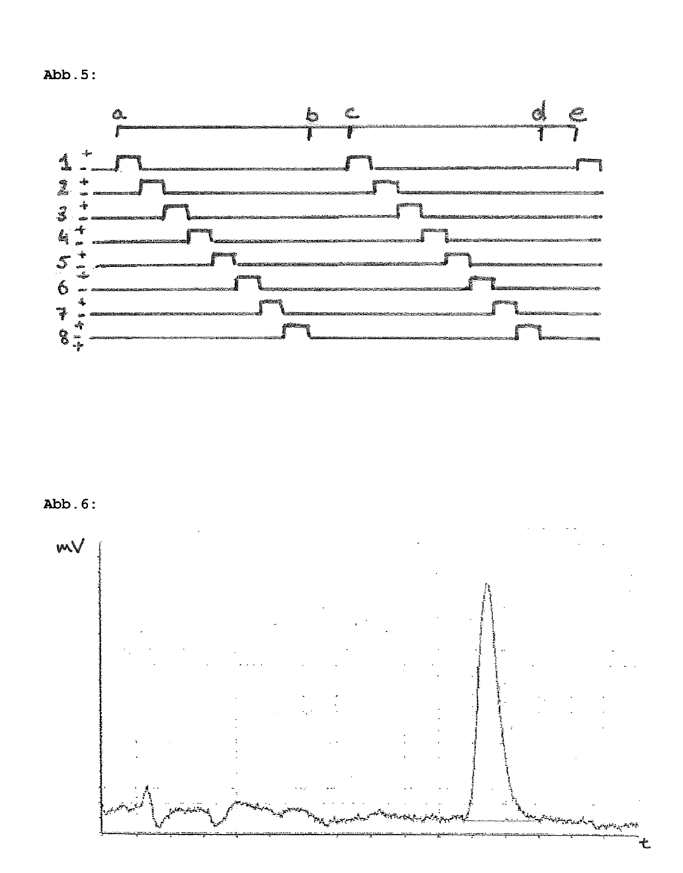

**Abb.5** zeigt ein Diagramm, das auf der x-Achse die Zeit t darstellt und auf der y-Achse die Schaltzyklen der verschiedenen LED-Lichtquellen. Die einzelnen Lichtquellen 1 bis 8 werden in Intervallen zeitversetzt nacheinander an- und ausgeschaltet. Die jeweilige LED-Lichtquelle ist in der auf der y-Achse angegebenen "-" Position ausgeschaltet und in der "+" Position eingeschaltet. Auf der x-Achse sind mit "a" bis "e" verschiedene Messzyklen angeben. Von "a" bis "e" erstreckt sich ein Messzyklus, der sich aus einem Schaltzyklus der LED-Lichtquellen 1 bis 8 und einem Zyklus zur Bestimmung der Hintergrundsignale zusammensetzt. Im Zeitintervall von "a" bis "b" wird das durch die bestrahlte Probe durchtretende Licht von einem Detektor gemessen. Dazu werden nacheinander die LED-Lichtquellen 1 bis 8 an- und ausgeschaltet. Im Zeitintervall von "b" bis "c" auf der x-Achse wird das Hintergrundsignal ermittelt, während alle LED-Lichtquellen ausgeschaltet sind. Der gesamte Messzyklus wird im Zeitintervall von "c" bis "e" wiederholt.

**Abb.6** zeigt ein Beispielchromatrogramm einer 5 ppb Chrom-Diphenylcarbazollösung gemessen mit dem erfindungsgemässen Verfahren. Als Eluent wurde 12 mmol/L Na₂CO₃ und 4,0 mmol/L NaHCO₃ mit einer Flussrate von 0,8 mL/min auf einer Metrosep A Supp 5-100/4.0 Säule bei einer Säulentemperatur von 40°C verwendet.

Das Messintervall betrug 3 ms mit einer Verzögerungszeit von 2 ms und einer Zykluspause von 3 ms bei einer Wellenlänge von 520 ± 15 nm. Die gemessene Signalhöhe beträgt ca. 7,73 mV mit einem Signalrauschen von ca. 0,3 mV. Die Elutionszeit beträgt t= 5,73 min. Das Signal/Rauschverhältnis beträgt ca. 1:26.

## Patentansprüche

1. Verwendung eines nicht flexiblen oder nicht flexibel angeordneten Lichtwellenleiters zur Übertragung von Lichtwellen bei der Detektion von Analyten in der Durchflussanalyse und Chromatographie.

2. Verwendung nach Anspruch 1, wobei es sich bei der Chromatographie um Ionenchromatographie handelt.

3. Verfahren zur Detektion von Analyten in der Durchflussanalyse und Chromatographie, umfassend
a) das Bereitstellen einer oder mehrerer Lichtquellen, eines Lichtwellenleiters, eines Behältnisses enthaltend eine Probe mit einem oder mehreren Analyten und eines oder mehrerer Detektoren,
b) das Aussetzen des Behältnisses enthaltend die Probe dem Licht einer oder unterschiedlicher, definierter Wellenlängen und/oder Wellenlängenbereiche und
c) das Erfassen der resultierenden Lichtwellen mittels eines oder mehrerer Detektoren nach dem Aussetzen des Probenbehältnisses dem Licht einer oder unterschiedlicher, definierter Wellenlängen und/oder Wellenlängenbereiche, wobei das Bestrahlen der Probe erfolgt, indem die Lichtwellen vor Eintritt in das Probenbehältnis durch einen einzigen, gegebenenfalls verzweigten, nicht flexiblen oder nicht flexibel angeordneten Lichtwellenleiter übertragen werden.

4. Verfahren nach Anspruch 3, wobei die Chromatographie Ionenchromatographie ist.

5. Verfahren nach einem der Ansprüche 3 oder 4, wobei das Behältnis eine Durchflusszelle ist.

6. Verfahren nach einem der vorangehenden Ansprüche 3 bis 5, wobei die Lichtquellen LEDs sind, die insbesondere Licht aus dem sichtbaren, UV-, IR- und/oder NIR-Bereich emittieren.

7. Verfahren nach einem der vorangehenden Ansprüche 3 bis 6, wobei der Lichtwellenleiter eine Unterlagenschicht, eine Kernschicht und eine Mantelschicht umfasst.

8. Verfahren nach Anspruch 7, wobei die Mantel- und Unterschicht ein Polymer mit dem Brechungsindex 1.47 bis 1.5 und die Kernschicht ein Polymer mit dem Brechungsindex 1.40 bis 1.50 umfasst.

9. Verfahren nach einem der vorangehenden Ansprüche 3 bis 8, wobei der Lichtwellenleiter und/oder die Lichtquelle oder Lichtquellen auf einer Platine angebracht, insbesondere integriert ist.

10. Verfahren nach Anspruch 9, wobei die Platine zumindest im Bereich des Lichtwellenleiters von einer lichtdichten und/oder wärmeleitfähigen Abdeckung abgedeckt, insbesondere umschlossen wird.

11. Verfahren nach einem der vorangehenden Ansprüche 3 bis 10, wobei die nach Bestrahlung der Probe zu erfassenden Lichtwellen aus Durchlicht, Reflektion oder Fluoreszenz resultieren können.

12. Verfahren nach einem der vorangehenden Ansprüche 3 bis 11, wobei der Detektor eine oder mehrere Photodioden, insbesondere ein CCD-Sensor ist.

13. Verfahren nach einem der vorangehenden Ansprüche 3 bis 12, wobei das Messintervall des Detektors während der Schaltzeit der Lichtquelle und nach Beginn der Bestrahlung der Probe einsetzt.

14. Verfahren nach Anspruch 13, wobei ein weiteres Messintervall erfolgt, nachdem die Bestrahlung beendet ist.

15. Verfahren nach einem der vorangehenden Ansprüche 3 bis 14, wobei in einem weiteren Verfahrensschritt mit einem mathematischen Auswertverfahren die erfassten Signale von mehreren sequenziell oder gleichzeitig emittierten Wellenlängen ausgewertet werden.
